# EUROPÄISCHE PATENTSCHRIFT

(11) **EP 2 767 814 B1**
(45) Veröffentlichungstag und Bekanntmachung des Hinweises auf die Patenterteilung: **28.08.2019**
(21) Anmeldenummer: 13000733.9
(22) Anmeldetag: 13.02.2013
(51) Int. Cl.: G01M 13/02, G01M 99/00, G01N 3/22

(54) **Lastprüfstand für ein Stellsystem mit einer Abtriebswelle**
Load test stand for control systems with an output shaft
Banc d'essai de charge pour système de commande avec un arbre de sortie

(43) Veröffentlichungstag der Anmeldung: 20.08.2014
(73) Patentinhaber: MBDA Deutschland GmbH, 86529 Schrobenhausen (DE)
(72) Erfinder: Klaffert, Thomas, D-85356 Freising (DE)
(74) Vertreter: Isarpatent

(56) Entgegenhaltungen:
- DE-A1- 3 840 261
- DE-A1-102006 029 556
- JP-A- S60 133 350
- US-A- 1 574 491

## Beschreibung

Die vorliegende Erfindung betrifft einen Lastprüfstand, bevorzugt zum Simulieren von Lastzyklen. Insbesondere bei in Flugkörpern bzw. Flugkörpersystemen eingesetzten einachsigen oder mehrachsigen Stellsystemen ist ein Nachweis der erreichten Performance hinsichtlich Einhaltung der spezifizierten Daten gefordert. Im Falle von Rudersystemen oder Flügelstellsystemen für Flugkörpern sind hierfür unter anderem die ist-Werte für Stellwinkel und/oder Stellgeschwindigkeit und/oder Stellbeschleunigung in beiden Bewegungsrichtungen sowie die erreichte Bandbreite bei abtriebsseitig vorgegebenen Lastmomenten und Trägheiten unter allen geforderten Umweltbedingungen zu ermitteln. Darüber hinaus kann die gleichzeitige Aufbringung von Querkräften auf die Abtriebswellen des Stellsystems gefordert sein. Prüfstände zum Aufbringen von Zug- und/oder Druckkräften sind beispielsweise aus der DE 38 40 261 A1 oder der JP S60 133350 A bekannt.

Zur Simulation realistischer Lastzyklen für in Flugkörpersystemen eingebundene Stellsysteme wurden bereits aktive, zumeist servomotorisch oder servohydraulisch betriebene Lastprüfstände entwickelt, die entsprechend berechneten Vorgaben oder geschlossenen Simulationsschleifen realitätsnah externe Lastverläufe auf die Abtriebswellen eines zu prüfenden Stellsystems aufbringen können. Aufgrund ihres sehr hohen Gesamtaufwandes und der eingeschränkten Anpassungsfähigkeit ihrer erreichbaren Lastdynamik an unterschiedliche Stellsystembaugrößen stehen diese nur in begrenztem Umfang zur Verfügung.

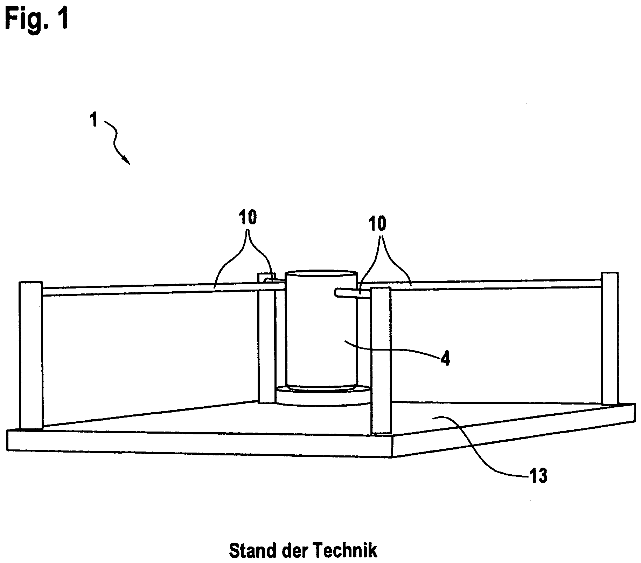

Für den alleinigen Nachweis der spezifizierten Stellsystem-Kenndaten werden deshalb bevorzugt einfache und kostengünstige passive Lastprüfstände eingesetzt, deren konstruktive Ausführung einschließlich Schnittstellen speziell auf die Anforderungen und Gegebenheiten eines bestimmtes Typs eines Stellsystems abgestimmt werden kann. Dabei liegt bei den bisher bekannten Anwendungen folgendes Prinzip zugrunde (vgl. Figur 1): An jeder Abtriebswelle 6 des zu prüfenden Stellsystems 4 wird ein Torsionsstab 10 oder auch eine Kombinationen mehrerer zusammengeschalteter Torsionsstäbe 10 angeflanscht, wobei der Torsionsstab 10 proportional zur Stellwinkeländerung ein Drehmoment einprägt. Prinzipbedingte Abweichungen von der Linearität lassen sich durch genaue Vermessung des Lastprüfstandes 1 erfassen, wobei der Kalibrationsaufwand hierfür sehr gering im Vergleich zu aktiven Lastprüfständen ist. Bei kraftschlüssiger Einspannung der Torsionsstäbe 10 sind darüber hinaus Spielfreiheit und die notwendige Robustheit gegenüber Umwelteinflüssen laut Prüfvorschrift gegeben.

Prinzipiell bietet auch die im Vergleich zu aktiven Prüfständen deutlich geringere Eigenmasse deutlich bessere Voraussetzungen für eine Kombinierbarkeit mit anderen Prüfgeräten wie Shaker, Klimakammern, etc., die jedoch, wie nachfolgend beschrieben, aus anderen strukturmechanischen Gründen bisher nur bedingt nutzbar sind. Der Einsatz nahezu linearer Torsionsfedern als setzt jedoch voraus, dass einerseits die konstruktiv zu realisierende Federkonstante den Vorgaben der Prüfvorschrift für Stellsysteme entspricht und andererseits, dass ihre Dimensionierung eine Abdeckung ausreichend großer Stellwinkelbereiche entsprechend allen geforderten Nachweisen zulässt. Durch letztere Forderung wird maßgeblich die Mindestlänge der Torsionsstäbe und somit die Größe des gesamten Lastprüfstandes bestimmt, die insbesondere im Falle mehrachsiger Stellsystemen sehr große Klimakammern bedingt und bezüglich Eignung für Vibrationsversuche zu erheblichen strukturmechanischen Schwierigkeiten führt.

Theoretisch ließe durch unterschiedliche Offset-Winkel bei der Anflanschung der Torsionsfeder an die Abtriebswelle eine Reduktion des erforderliche Stellbereiches und somit der Federbaugröße erzielen, wobei das dafür notwendige Umspannen verbunden mit der entsprechenden Vervielfachung der erforderlichen Temperaturzyklen in Klimakammern zu einen nicht vertretbaren Aufwand führen würde.

Nachteilige Folgen der bekannten Prüfstände aus dem Stand der Technik sind daher der Bedarf enorm großer und leistungsfähigen Klimakammern im Vergleich zur Größe des zu prüfenden Stellsystems sowie der resultierenden, unvorteilhaften Strukturabmessungen hinsichtlich dreiachsigen Aufspannbarkeit für Prüfungen unter Vibrationsbelastung. Bisher erfordern letztere daher separate Prüfvorrichtungen, womit nur eine separate Funktionsprüfung ohne Aufbringung von Torsionsmomenten erfolgen kann. Eine zusätzliche Aufbringung von Querkräften auf die Abtriebswellen des Stellsystems erfordert die Anbindung einer oder mehrerer zusätzlicher Einrichtungen am Prüfstandsaufbau, die in Figur 1 nicht dargestellt sind.

Es ist Aufgabe der Erfindung, einen Lastprüfstand anzugeben, der bei einfacher und kostengünstiger Herstellung kompakte Abmessungen aufweist und eine schnelle und sichere Prüfung von Stellsystemen ermöglicht.

Gelöst wird die Aufgabe durch die Merkmale des Anspruchs 1. Dieser offenbart einen Lastprüfstand, der insbesondere eine passive Bauweise aufweist. Der erfindungsgemäße Lastprüfstand umfasst ein Gestell, einen Flansch und eine Federmechanik. Die Federmechanik ist am Gestell gelagert und weist eine, bevorzugt symmetrische, Anordnung aus mindestens vier Federelementen auf. Der Flansch wird bevorzugt von der Federmechanik gelagert. Die Federmechanik weist dazu Gestellpunkte auf, die das Gestell mit der Federmechanik verbinden und weist Gelenkpunkte auf, die den Flansch mit der Federmechanik verbinden. Erfindungsgemäß ist der Flansch, insbesondere über einen Adapter, mit der Abtriebswelle eines zu prüfenden Stellsystems koppelbar. Durch die Verwendung der erfindungsgemäßen Federmechanik ist insbesondere der Flansch vertikal, horizontal und bezüglich seiner Neutralwinkelstellung positionierbar. Somit ist in vorteilhafter Weise eine Ausrichtung auf die Abtriebswelle des Stellsystems möglich. Ebenso ermöglicht die axial elastische Aufhängung des Flansches durch die Federmechanik bevorzugt eine Vermeidung einer Einleitung undefinierter Axialkräfte auf die Abtriebswelle, wie dies beispielsweise bei Temperaturänderungen auftreten könnte. Daher wirkt die Federmechanik vorteilhaft als Ausgleichselement. Jedoch ermöglicht das Verwenden der Federmechanik vorteilhaft das Aufbringen von definierten Querkräften auf die Abtriebswelle des zu prüfenden Stellsystems. Daher kann der erfindungsgemäße Lastprüfstand bevorzugt sehr flexibel eingesetzt werden, um unterschiedliche Belastungszustände zu prüfen.

Erfindungsgemäß sind die Gestellpunkte in zumindest einer Substruktur gelagert. Auf diese Weise bilden Substruktur und Federmechanik ein justierbares und/oder kalibrierbares eigenständiges Modul. Das Modul ist an dem Gestell befestigt, bevorzugt über eine universelle Schnittstelle. Durch die Verwendung des Moduls ist es insbesondere möglich, einen steifen Prüfstand zu realisieren, da das Modul nahe an dem zu prüfenden Stellsystem anordenbar ist. Somit befindet sich die Federmechanik vorteilhaft sehr dicht an dem Stellsystem. Eine steife und/oder spielfreie Anbindung der Federmechanik an das Stellsystem ist damit bevorzugt möglich.

Die Unteransprüche haben bevorzugte Weiterbildungen der Erfindung zum Inhalt.

Vorteilhafterweise ist mittels gleichgerichteter Veränderungen der Position von zumindest zwei Gestellpunkten derselben Substruktur eine Vorspannung der Federmechanik und/oder eine Position des Flansches entlang einer ersten Achse einstellbar. Daher erlaubt der erfindungsgemäße Lastprüfstand in der bevorzugten Ausführungsform eine Möglichkeit zum Einstellen des Flansches auf die Abtriebswelle des Stellsystems entlang einer ersten Achse.

Weiterhin ist bevorzugt vorgesehen, dass mittels entgegen gerichteter Veränderung der Position von zumindest zwei gegenüberliegenden Gestellpunkten unterschiedlicher Substrukturen eine Position des Flansches entlang einer zweiten Achse einstellbar ist. Dabei ist die zweite Achse bevorzugt senkrecht zu der zuvor genannten ersten Achse ausgerichtet. Daher kann in sehr vorteilhafter Weise der Lastprüfstand eine unabhängige Ausrichtung des Flansches entlang zweier senkrecht zueinander stehender Achsen ermöglichen.

Durch gleichgerichtete Veränderung der Position von zumindest zwei gegenüberliegenden Gestellpunkten ist schließlich bevorzugt vorgesehen, dass eine Position des Flansches entlang einer dritten Achse einstellbar ist. Die dritte Achse ist dabei vorteilhaft senkrecht zu den zuvor beschriebenen zwei Achsen, so dass eine Ausrichtung des Flansches unabhängig entlang von drei Achsen möglich ist.

Um die Position der Gestellpunkte und/oder der Lagerpunkte zu verändern, ist bevorzugt vorgesehen, dass Aktoren vorhanden sind. Mit diesen Aktoren kann die Position der Gestellpunkte und/oder der Lagerpunkte vorteilhaft verändert werden. Daher kann mittels des Prüfstandes eine vorgegebene Last auf den Flansch und damit auf das Stellsystem aufgebracht werden, wodurch der Lastprüfstand sehr flexibel einsetzbar ist. Alternativ oder zusätzlich ist bevorzugt vorgesehen, dass die Gestellpunkte und/oder die Lagerpunkte auch manuell einstellbar sind.

Weiterhin ist bevorzugt vorgesehen, dass mittels Veränderung der Position von zumindest einem Gestellpunkt eine Querkraft auf eine mit dem Flansch verbindbare Abtriebswelle des Stellsystems aufbringbar ist. Auf diese Weise wird dem erfindungsgemäßen Lastprüfstand ermöglicht, das Stellsystem auch daraufhin zu testen, wie dieses bei dem Auftreten von Querkräften auf die Abtriebsachsen reagiert. Daher ermöglicht der Lastprüfstand vorteilhaft ein sehr umfassendes Testen des Stellsystems.

In einer weiteren bevorzugten Ausführungsform ist mittels Veränderung der Position der Gelenkpunkte und/oder der Gestellpunkte eine Federcharakteristik der Federelemente einstellbar. Insbesondere ist die Federcharakteristik der Federelemente durch Veränderung der relativen Position der Gestellpunkte zu den Gelenkpunkten der Federelemente einstellbar. Bevorzugt kann die Federcharakteristik derart eingestellt werden, dass diese lineare Bereiche aufweist. Alternativ oder zusätzlich kann die Federcharakteristik derart eingestellt werden, dass diese zumindest linearisierbare Abschnitte aufweist. Vorteilhafterweise weist die Federcharakteristik mehrere lineare und/oder linearisierbare Abschnitte auf. Die vorteilhafte Verwendung linearer und/oder linearisierter Abschnitte der Federcharakteristik erlaubt das Durchführen sehr einfacher Testvorgänge, da Federkraft und Verdrehwinkel proportional zueinander sind.

Vorteilhafterweise weist der Lastprüfstand an dem Flansch ein Messsystem auf. Insbesondere ist das Messsystem als Winkelmesssystem ausgebildet. Somit wird eine exakte und einfache Messung des Verhaltens des Stellsystems ermöglicht. Der Lastprüfstand erlaubt daher ein schnelles und einfaches Prüfen des Stellsystems. Bevorzugt bildet das Messsystem im kalibrierten Zustand die Referenz für die Federcharakteristik der Federelemente der Federmechanik.

Schließlich ist bevorzugt vorgesehen, dass an dem Messsystem zumindest ein Trägheitskörper ankoppelbar ist. Besonders bevorzugt ist der Trägheitskörper fliegend lagerbar. Bevorzugt weist der Lastprüfstand daher Trägheitskörper auf, wobei die Trägheitskörper insbesondere Nachbildungen von Rudereinheiten oder Flügeleinheiten, die ansonsten mit dem zu prüfenden Stellsystem bewegbar wären, sein können.

Bevorzugt ist weiterhin vorgesehen, dass der durch die Federmechanik axial elastisch aufgehängte Flansch ein Toleranzausgleich axial zur Abtriebswelle des Stellsystems ermöglicht. Insbesondere dient die Federmechanik zum Ausgleich von temperaturbedingten Toleranzveränderungen. Außerdem ist bevorzugt vorgesehen, dass neben den Modulen auch weitere Komponenten an dem Gestell anordenbar sind. Insbesondere sind die weiteren Komponenten und/oder die Module rund um das Stellsystem herum an beliebigen Positionen anordenbar. Weiter ist vorteilhaft vorgesehen, dass das Modul, insbesondere die Substruktur des Moduls, eine Schutzeinhausung, eine Querführung der Federelemente, die Integration von Endanschlägen und/oder Sicherheitseinrichtungen bei der Ankoppelung und Abkoppelung an die Abtriebswelle des Stellsystems umfasst. Schließlich ist bevorzugt vorgesehen, dass die Substruktur jedes Moduls in das Gestell des Lastprüfstandes einbezogen werden kann. Hierdurch ergibt sich eine vorteilhafte dynamische Steifigkeit, so dass mit dem Lastprüfstand auch mehrachsige Vibrationsversuche gefahren werden können.

Die Erfindung wird nun anhand eines Ausführungsbeispiels unter Berücksichtigung der beigefügten Zeichnungen näher beschrieben. Dabei zeigen:
- Fig. 1: eine schematische Ansicht eines Lastprüfstandes nach dem Stand der Technik,
- Fig. 2: eine schematische Ansicht des Funktionsprinzips des Lastprüfstands gemäß einem Ausführungsbeispiel der Erfindung,
- Fig. 3: eine erste schematische Ansicht des Lastprüfstands gemäß dem Ausführungsbeispiel der Erfindung,
- Fig. 4: eine zweite schematische Ansicht des Lastprüfstandes gemäß dem Ausführungsbeispiel der Erfindung,
- Fig. 5: ein Diagramm mit der Federcharakteristik eines Torsionsstabes,
- Fig. 6: ein Diagramm mit der Federcharakteristik des Prüfstandes gemäß dem Ausführungsbeispiel der Erfindung, und
- Fig. 7: ein Diagramm mit einer alternative Federcharakteristik des Lastprüfstandes gemäß dem Ausführungsbeispiel der Erfindung.

Fig. 1 zeigt einen Prüfstand 1 gemäß dem Stand der Technik. Dieser wurde eingangs bereits beschrieben. Die Verwendung der Torsionsstäbe 10 macht eine große Abmessung des Gestells 13 nötig. Daher sind die Abmessungen des Prüfstands 1 deutlich größer als die Abmessungen des zu prüfenden Stellsystems 4.

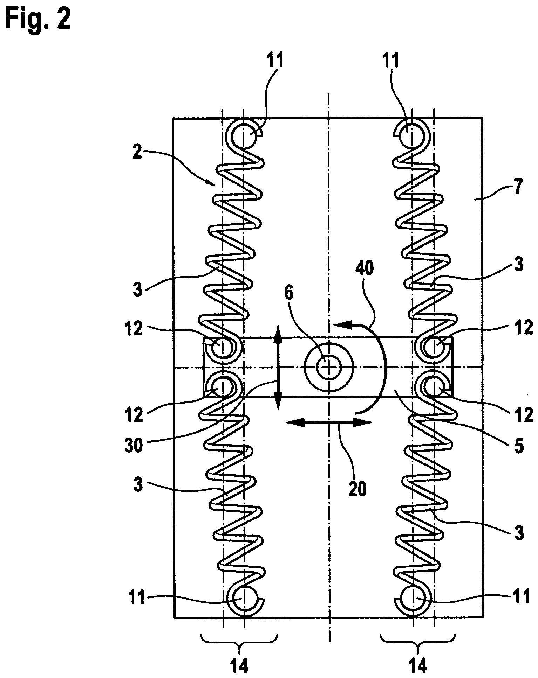

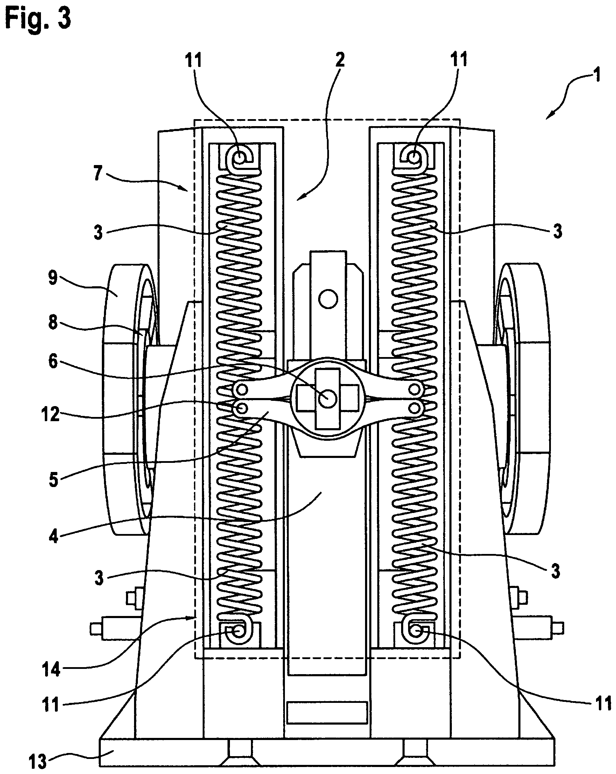

Fig. 2 zeigt schematisch die Funktionsweise des Prüfstands 1 gemäß einem Ausführungsbeispiel der Erfindung, während Fig. 3 eine schematische Ansicht einer Umsetzung des in Fig. 2 gezeigten Prinzips zeigt. Dazu sind mehrere Federelemente 3 vorhanden, die gemeinsam eine Federmechanik 2 bilden. Die Federmechanik 2 bildet eine Aufhängung für einen Flansch 5, an dem eine Abtriebswelle 6 eines zu prüfen Stellsystems 4 verbindbar ist.

Jedes Federelement 3 ist an einem Gelenkpunkt 12 mit dem Flansch 5 verbunden und ist mit dem Gestell 13 des Prüfstands 1 über einen Gestellpunkt 11 verbunden. Die Gestellpunkte 11 sind in mehreren Substrukturen 14 gelagert, so dass sich mehrere unabhängige Module 7 ergeben.

Durch Verändern der Position der Gestellpunkte 11 und/oder der Gelenkpunkte 12 ist eine Ausrichtung des Flansches 5 möglich. Auf dieselbe Weise ist es ebenso möglich, Querkräfte auf eine mit dem Flansch 5 verbundene Abtriebswelle 6 aufzubringen, indem der Flansch 5 nach Ausrichten und Verbinden mit der Abtriebswelle 6 in seiner Position nochmals verfahren wird. In diesem Fall dient die Abriebswelle 6 als Gegenlager, so dass die Abriebswelle 6 eine Querkraft aufnehmen muss.

Insbesondere ist der Flansch 5 entlang einer ersten Achse 20, einer zweiten Achse 30 und einer vierten Achse 40 ausrichtbar. In der in Fig. 2 gezeigten Abbildung befinden sich die erste Achse 20 und die zweite Achse 30 parallel zu der Zeichenebene und stehen senkrecht aufeinander. Die dritte Achse 40 ist eine Rotationsachse und steht senkrecht auf der ersten Achse 20 und der zweiten Achse 30, so dass eine Rotation des Flansches 5 innerhalb der Zeichenebene ermöglicht wird.

Durch ein gleichgerichtetes Verschieben von zwei Gestellpunkten 11 derselben Substruktur 14, ist es möglich, den Flansch 5 entlang der ersten Achse 20 auszurichten. So können beispielsweise die beiden Gestellpunkte 11 einer Substruktur 14 nach außen, d.h., von der Abtriebsachse 6 weg, bewegt werden, um so den Flansch 5 in dieselbe Richtung wie die Gestellpunkte 11 zu bewegen. Sollten die Gestellpunkte 11 derselben Substruktur entgegengesetzt bewegt werden, beispielsweise ein Gestellpunkt 11 nach innen und ein weiterer Gestellpunkt 11 nach außen, so verändert sich die Position des Flansches 5 nicht. Jedoch kann auf diese Weise die Vorspannung der Federmechanik 2 vergrößert werden, da der jeweilige Federweg zwischen Gestellpunkt 11 und Gelenkpunkt 12 verlängert wird.

Werden zwei gegenüberliegende Gestellpunkte 11 unterschiedlicher Substrukturen 14 in entgegengesetzte Richtungen verschoben, so ist ein Verschieben des Flansches 5 entlang der zweiten Achse 30 möglich. So können beispielsweise zwei Gestellpunkte 11 voneinander wegbewegt werden, um den Flansch 5 entlang der zweiten Achse 30 in Richtung der Gestellpunkte 11 zu bewegen.

Schließlich ist durch eine gleichgerichtete Veränderung der Position zweier gegenüberliegender Gestellpunkte 11 unterschiedlicher Substrukturen 14 eine Verdrehung des Flansches 5 um die dritte Achse 40 möglich. Daher ist eine Position des Flansches 5 exakt einstellbar, wobei sämtliche relevanten Richtungen unabhängig voneinander einstellbar sind. Daher ist der erfindungsgemäße Lastprüfstand 1 gemäß dem Ausführungsbeispiel sehr flexibel einstellbar und kann daher für eine Vielzahl von Anwendungsfällen verwendet werden.

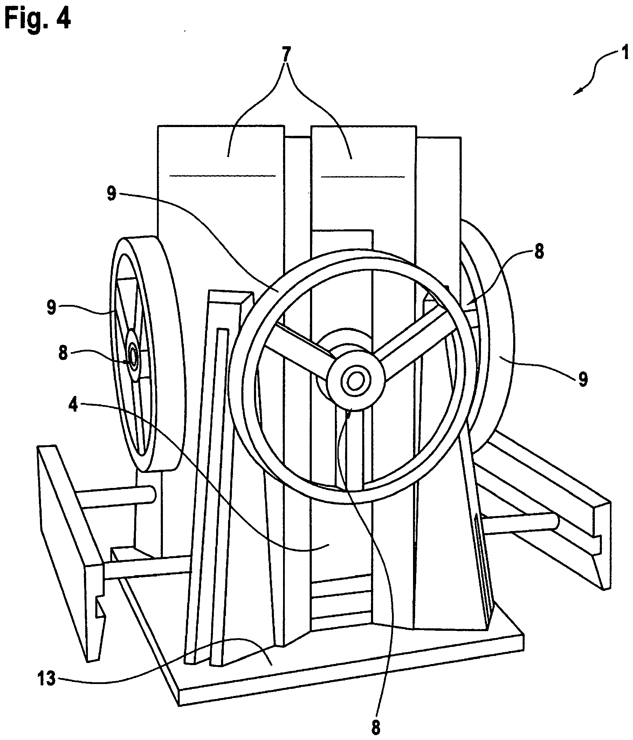

Fig. 4 zeigt beispielhaft den Aufbau des erfindungsgemäßen Prüfstands 1 gemäß dem Ausführungsbeispiel. Dieser umfasst ein Gestell 13, an dem mehrere unabhängige Module 7 angebracht sind. Dabei folgen die Module 7 dem in Fig. 2 und 3 gezeigten Aufbau. Jedes der Module 7 ist mit dem Flansch 5 (in Fig. 4 nicht sichtbar) verbunden, so dass der Flansch 5 an dem Modul 7 derart gelagert ist, dass die Module 7 einen Toleranzausgleich vornehmen können. Beispielsweise können so Auswirkungen von Temperaturschwankungen eliminiert werden, so dass Temperaturschwankungen nicht als Fehlerquelle in dem Lastprüfstand 1 auftreten. An dem Flansch 5 sind mehrere Messsysteme 8 angebracht, die Kräfte und/oder Momente bestimmen können, die von dem Stellsystem 4 auf dem Flansch 5 aufgebracht werden. Zur Verbesserung der Messungen und zum Erzeugen einer realistischeren Simulation können an den Messsystemen 8 Trägheitskörper 9 angeordnet werden, die bevorzugt zur Nachbildung von Ruderträgheiten oder Flügelträgheiten ausgebildet sind. Somit kann der Einfluss dieser Masseträgheiten, den das Stellsystem 4 im Betrieb ausgesetzt sein wird, mit dem erfindungsgemäßen Lastprüfstand 1 des Ausführungsbeispiels bereits simuliert werden. Für eine einfache und schnelle Austauschbarkeit der Trägheitskörper 9 ist insbesondere vorgesehen, dass diese fliegend an dem Messsystem 8 gelagert sind.

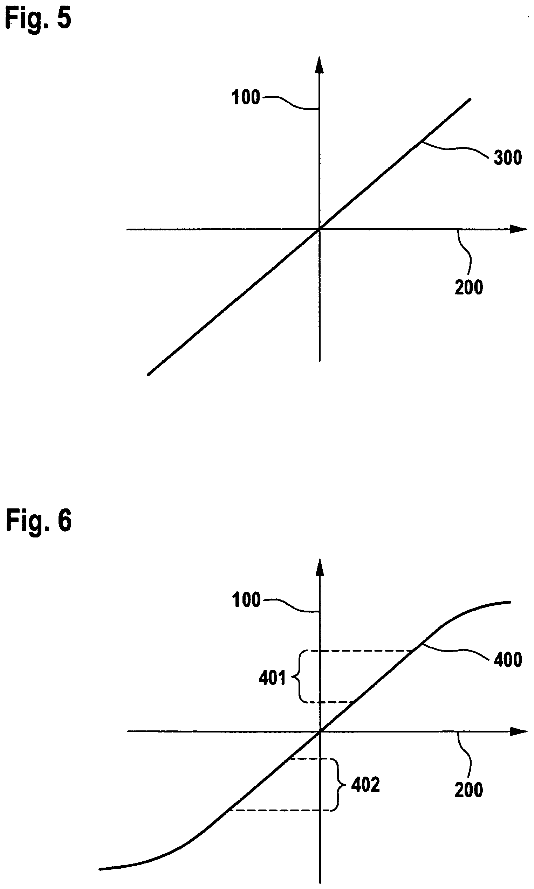

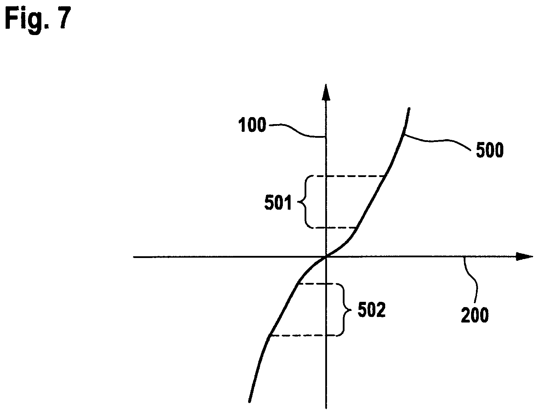

Die Fig. 5, 6 und 7 zeigen drei verschiedene Federcharakteristika, wobei Fig. 5 eine erste Federcharakteristik 300 eines Torsionsstabs zeigt, während die Fig. 6 und 7 eine zweite Federcharakteristik 400 eines Federelements und eine dritte Federcharakteristik 500 eines Federelements zeigen. Zur Darstellung werden Diagramme verwendet, die stets eine Momentachse 100 und eine Verdrehachse 200 aufweisen. Aus Fig. 5 ist ersichtlich, dass die erste Federcharakteristik 300 nahezu linear verläuft. Dies ist der große Vorteil eines Torsionsstabs, was dessen häufige Verwendung im Stand der Technik begründet. Jedoch zeigt sich aus den Fig. 6 und 7, dass auch die zweite Federcharakteristik 400 sowie die dritte Federcharakteristik 500 stets lineare und/oder linearisierbare Bereiche aufweisen: So kann in Fig. 6 ein erster linearer Bereich 401 sowie ein zweiter linearer Bereich 402 innerhalb der zweiten Federcharakteristik 400 gefunden werden. Ebenso ist es möglich, einen ersten linearen Bereich 501 sowie einen zweiten linearen Bereich 502 der dritten Federcharakteristik 500 abzugrenzen. Die erfindungsgemäße Verwendung des zuvor beschriebenen Lastprüfstands 1 ermöglicht durch Veränderung von Gestellpunkten 11 und Gelenkpunkten 12, die Federcharakteristik der einzelnen Federelemente 3 genau einzustellen. Daher ist es möglich, die Federcharakteristiken der Federelemente 3 derart einzustellen, dass diese in die linearen Bereiche 401, 402, 501, 502 fallen. Somit ist eine Messung mit dem erfindungsgemäßen Lastprüfstand sehr einfach, da ein aufgebrachtes Moment nahezu proportional zu der gemessenen Verdrehung ist.

Der erfindungsgemäße Lastprüfstand 1 gemäß dem in den Figuren gezeigten Ausführungsbeispiel weist daher die folgenden vorteilhaften Möglichkeiten auf:
- Adaptionsmöglichkeit der Torsions-Federcharakteristik durch Wahl der kinematischen Abmessungen durch die Gelenkpositionen 12, wobei durch erzeugbare Umkehrbewegungen einzelner Federwege innerhalb des Winkelstellbereiches auch mehrere lineare Abschnitte 401, 402; 501, 502 der Federkennlinie 400, 500 zu ermöglichen sind, die auf den Prüfvorschriften und zugleich gemeinsamer Abdeckung der jeweiligen Stellwinkelbereiche zugeschnitten ausgelegt werden können; somit ergibt sich eine Reduktion des Umspannaufwandes an den Abtriebswellen 6 des Stellsystems 4, wodurch keine Wiederholung von Temperaturzyklen erforderlich ist
- Präzise Positionierbarkeit des Flansches 5 vertikal, horizontal und bezüglich seiner Neutralwinkelstellung
- Kalibration der gewünschten Federcharakteristik für jede Abtriebswelle 6, wofür vorteilhaft die jeweils, insbesondere separat kalibrierten, Messsysteme 8 zur Aufzeichnung der abtriebsseitigen Stellwinkelverläufe einbezogen werden
- Vermeidung einer Einleitung undefinierter Axialkräfte in die Abtriebswelle 6 des Stellsystems 4, beispielsweise durch Temperaturänderungen, durch die axial elastische Aufhängung des Flansches 5 in der Federmechanik 2
- Schutzeinhausung der Federmechanik 2, die in die tragende Struktur des gesamten Lastprüfstandes 1 einbezogen werden kann und zugleich vorteilhafte Eigenschaften bezüglich sicherer Betätigung der Kupplungen zur Anbindung es Flansches 5 an die Abtriebswellen 6 des Stellsystems 4, einschließlich Integrationsmöglichkeit von Endanschlägen, aufweisen; hierdurch wird eine kompakte Bauweise mit Blick auf eine Unterbringung in vergleichsweise kleinen Klimakammern möglich, die darüber hinaus die erforderlichen strukturmechanischen Eigenschaften bezüglich Eignung für mehrachsige Vibrationsversuche realisieren kann
- Einbeziehung der vorhandenen Eigenträgheit in die abtriebsseitig aufzubringenden Trägheitskörper 9
- Aufbringbarkeit von Querkräften mit der Federmechanik 2 durch Änderung der Position der Gestellpunkte (11) nach Fixierung des Flansches 5 an der Abtriebswelle 6 des Stellsystems 4
- Die flache Bauweise der Module 7 gestattet deren Anordnung dicht am Stellsystem, 4 wodurch eine Parallelschaltung mehrerer Module 7 möglich wird, beispielsweise zur Abdeckung größerer Drehmomentbereiche, Überlagerung unterschiedlicher Federkennlinien oder zur separaten Einleitung von Querkräften in beliebiger Richtung

### Bezugszeichenliste

- 1: Lastprüfstand
- 2: Federmechanik
- 3: Federelement
- 4: Stellsystem
- 5: Flansch
- 6: Abtriebswelle
- 7: Modul
- 8: Messsystem
- 9: Trägheitskörper
- 10: Torsionsstab
- 11: Gestellpunkt
- 12: Gelenkpunkt
- 13: Gestell
- 14: Substruktur

- 20: erste Achse
- 30: zweite Achse
- 40: dritte Achse

- 100: Momentachse
- 200: Verdrehachse
- 300: erste Federkennlinie
- 400: zweite Federkennlinie
- 401: erster linearer Bereich der zweiten Federkennlinie
- 402: zweiter linearer Bereich der zweiten Federkennlinie
- 500: dritte Federkennlinie
- 501: erster linearer Bereich der dritten Federkennlinie
- 502: zweiter linearer Bereich der dritten Federkennlinie

## Patentansprüche

1. Lastprüfstand (1) für ein Stellsystem, umfassend:
- ein Gestell (13),
- einen Flansch (5), und
- eine am Gestell (13) gelagerte Federmechanik (2), die eine, bevorzugt symmetrische, Anordnung aus mindestens vier Federelementen (3) umfasst,
- wobei die Federmechanik (2) Gestellpunkte (11) aufweist, die die Federmechanik (2) und das Gestell (13) verbinden und Gelenkpunkte (12) aufweist, die die Federmechanik und den Flansch (5) verbindet, und
- wobei der Flansch (5) mit einer Abtriebswelle (6) eines zu prüfenden Stellsystems (4) koppelbar ist, und
- wobei die Gestellpunkte (11) in zumindest einer Substruktur (14) gelagert sind, wobei Substruktur (14) und Federmechanik (2) ein justierbares und/oder kalibrierbares eigenständiges Modul (7) bilden, und wobei das Modul (7) an dem Gestell (13) angeordnet ist.

2. Lastprüfstand (1) nach Anspruch 1, **dadurch gekennzeichnet, dass** mittels gleichgerichteter Veränderung der Position von zumindest zwei Gestellpunkten (11) derselben Substruktur (14) eine Vorspannung der Federmechanik (2) einstellbar ist.

3. Lastprüfstand (1) nach Anspruch 1 oder 2, **dadurch gekennzeichnet, dass** mittels gleichgerichteter Veränderung der Position von zumindest zwei Gestellpunkten (11) derselben Substruktur (14) eine Position des Flansches (5) entlang einer ersten Achse (20) einstellbar ist.

4. Lastprüfstand (1) nach Anspruch 3, **dadurch gekennzeichnet, dass** mittels gegengerichteter Veränderung der Position von zumindest zwei gegenüberliegenden Gestellpunkten (11) eine Position des Flansches (5) entlang einer zweiten Achse (30) einstellbar ist.

5. Lastprüfstand (1) nach Anspruch 4, **dadurch gekennzeichnet, dass** mittels gleichgerichteter Veränderung der Position von zumindest zwei gegenüberliegenden Gestellpunkten (11) eine Position des Flansches (5) entlang einer dritten Achse (40) einstellbar ist.

6. Lastprüfstand (1) nach einem der vorhergehenden Ansprüche, **dadurch gekennzeichnet, dass** eine Position der Gestellpunkte (11) und/oder der Lagerpunkte (12) durch zumindest einen Aktor veränderbar ist.

7. Lastprüfstand (1) nach einem der vorhergehenden Ansprüche, **dadurch gekennzeichnet, dass** mittels Veränderung der Position von zumindest einem Gestellpunkt (11) eine Querkraft auf eine mit dem Flansch (5) verbindbare Abtriebswelle (5) einstellbar ist.

8. Lastprüfstand (1) nach einem der vorhergehenden Ansprüche, **dadurch gekennzeichnet, dass** mittels Veränderung der Position der Gelenkpunkte (12) eine Federcharakteristik der Federelemente (3) einstellbar ist, insbesondere derart, dass die Federcharakteristik lineare Bereiche aufweist.

9. Lastprüfstand (1) nach einem der vorhergehenden Ansprüche, **dadurch gekennzeichnet, dass** an dem Flansch (5) ein Messsystem (8), insbesondere ein Winkelmesssystem, angeordnet ist.

10. Lastprüfstand (1) nach Anspruch 9, **dadurch gekennzeichnet, dass** zumindest eine Trägheitskörper (9) an dem Messsystem (8) ankoppelbar ist, wobei der Trägheitskörper (9) bevorzugt fliegend lagerbar ist.

## Claims

1. Load test rig (1) for a servo-system, comprising:
- a frame (13),
- a flange (5), and
- a spring mechanism (2) mounted on the frame (13), comprising a preferably symmetrical arrangement of at least four spring elements (3),
- wherein the spring mechanism (2) has frame points (11) which connect the spring mechanism (2) and the frame (13), and has hinge points (12) which connect the spring mechanism and the flange (5), and
- wherein the flange (5) can be coupled to an output shaft (6) of a servo-system (4) to be tested, and
- wherein the frame points (11) are mounted in at least a substructure (14), wherein the substructure (14) and spring mechanism (2) form an adjustable and/or calibratable independent module (7), and wherein the module (7) is arranged on the frame (13).

2. Load test rig (1) according to claim 1, **characterised in that** a pretensioning of the spring mechanism (2) can be adjusted by means of a similarly aligned change in the position of at least two frame points (11) on the same substructure (14).

3. Load test rig (1) according to claim 1 or 2, **characterised in that** a position of the flange (5) along a first axis (20) can be adjusted by means of a similarly aligned change in the position of at least two frame points (11) on the same substructure (14).

4. Load test rig (1) according to claim 3, **characterised in that** a position of the flange (5) along a second axis (30) can be adjusted by means of an opposite-aligned change in the position of at least two opposing frame points (11).

5. Load test rig (1) according to claim 4, **characterised in that** a position of the flange (5) along a third axis (40) can be adjusted by means of a similarly aligned change in the position of at least two opposing frame points (11).

6. Load test rig (1) according to any one of the preceding claims, **characterised in that** a position of the frame points (11) and/or of the bearing points (12) can be altered by means of at least one actuator.

7. Load test rig (1) according to any one of the preceding claims, **characterised in that** by altering the position of at least one frame point (11) a lateral force can be adjusted on an output shaft (5) connectable to the flange (5).

8. Load test rig (1) according to any one of the preceding claims, **characterised in that** spring characteristics of the spring elements (3) can be adjusted by changing the position of the hinge points (12), in particular such that the spring characteristics have linear regions.

9. Load test rig (1) according to any one of the preceding claims, **characterised in that** a measuring system (8), in particular an angle measurement system, is arranged on the flange (5).

10. Load test rig (1) according to claim 9, **characterised in that** at least one inertial body (9) can be coupled to the measuring system (8), wherein the inertial body (9) can preferably be mounted in a cantilever manner.

## Revendications

1. Banc d'essai de charge (1) pour un système d'asservissement, comprenant :
- un bâti (13),
- une bride (5), et
- un mécanisme de ressort (2), supporté sur le bâti (13), qui comprend un ensemble, de préférence symétrique, d'au moins quatre éléments de ressort (3),
- le mécanisme de ressort (2) comportant des points de bâti (11) qui raccordent le mécanisme de ressort (2) et le bâti (13), et comportant des points d'articulation (12) qui raccordent le mécanisme de ressort et la bride (5),
- la bride (5) pouvant être couplée à un arbre de sortie (6) d'un système d'asservissement (4) à contrôler, et
- les points de bâti (11) étant supportés dans au moins une infrastructure (14), l'infrastructure (14) et le mécanisme de ressort (2) formant un module (7) autonome ajustable et/ou étalonnable, et le module (7) étant disposé sur le bâti (13).

2. Banc d'essai de charge (1) selon la revendication 1, **caractérisé en ce qu'**une pré-tension du mécanisme de ressort (2) peut être réglée au moyen d'une modification, dans le même sens, de la position d'au moins deux points de bâti (11) de la même infrastructure (14).

3. Banc d'essai de charge (1) selon la revendication 1 ou 2, **caractérisé en ce qu'**une position de la bride (5) peut être réglée le long d'un premier axe (20) au moyen d'une modification, dans le même sens, de la position d'au moins deux points de bâti (11) de la même infrastructure (14).

4. Banc d'essai de charge (1) selon la revendication 3, **caractérisé en ce qu'**une position de la bride (5) peut être réglée le long d'un deuxième axe (30) au moyen d'une modification, dans des sens contraires, de la position d'au moins deux points de bâti (11) opposés.

5. Banc d'essai de charge (1) selon la revendication 4, **caractérisé en ce qu'**une position de la bride (5) peut être réglée le long d'un troisième axe (40) au moyen d'une modification, dans le même sens, de la position d'au moins deux points de bâti (11) opposés.

6. Banc d'essai de charge (1) selon l'une des revendications précédentes, **caractérisé en ce qu'**une position des points de bâti (11) et/ou des points de support (12) peut être modifiée par au moins un actionneur.

7. Banc d'essai de charge (1) selon l'une des revendications précédentes, **caractérisé en ce qu'**une force transversale sur un arbre de sortie (5) pouvant être raccordé à la bride (5) peut être réglée au moyen d'une modification de la position d'au moins un point de bâti (11).

8. Banc d'essai de charge (1) selon l'une des revendications précédentes, **caractérisé en ce qu'**une caractéristique de ressort des éléments de ressort (3) peut être réglée au moyen d'une modification de la position des points d'articulation (12), en particulier de telle sorte que la caractéristique de ressort présente des plages linéaires.

9. Banc d'essai de charge (1) selon l'une des revendications précédentes, **caractérisé en ce qu'**un système de mesure (8), en particulier un système de mesure d'angle, est disposé sur la bride (5).

10. Banc d'essai de charge (1) selon la revendication 9, **caractérisé en ce qu'**au moins un corps à inertie (9) peut être couplé au système de mesure (8), le corps à inertie (9) pouvant de préférence être supporté de façon flottante.
